# EUROPEAN PATENT SPECIFICATION

(11) **EP 3 309 005 B1**
(45) Date of publication and mention of the grant of the patent: **26.05.2021**
(21) Application number: 17161184.1
(22) Date of filing: 15.03.2017
(51) Int. Cl.: B60N 2/75, B60R 7/04

(54) **SLIDING ARMREST FOR VEHICLE**
GLEITENDE ARMLEHNE FÜR EIN FAHRZEUG
ACCOUDOIR COULISSANT POUR VÉHICULE

(30) Priority: 12.10.2016 KR 20160132186
(43) Date of publication of application: 18.04.2018
(73) Proprietor: SEOYON E-HWA CO., LTD., Gangnam-gu Seoul 06220 (KR)
(72) Inventor: CHOI, Bong Joo, 31100 Chungcheongnam-do (KR); LEE, Yong Su, 31531 Chungcheongnam-do (KR)
(74) Representative: Zinkler, Franz

(56) References cited:
- KR-B1- 101 500 271
- US-A1- 2013 153 717
- US-A1- 2016 001 684
- US-A1- 2017 057 387

## Description

### CROSS-REFERENCE TO RELATED APPLICATION(S)

### BACKGROUND OF THE INVENTION

### Field of the Invention

Exemplary embodiments of the present invention relate to a sliding armrest for a vehicle, and more particularly, to a sliding armrest for a vehicle capable of being selectively slid by including a stopper operated corresponding to an operation of a knob.

### Description of the Related Art

Generally, a console with a storage space for storing relatively small-sized articles is provided between a driver's seat and a passenger seat of a vehicle, and an armrest opening and closing the storage space and serving as a support on which a passenger may put his/her arm is installed on the console.

In this case, it is a general trend that the armrest has a structure in which it is slidable forward and backward according to a physical condition of the passenger.

In this regard, a prior art that relates to a sliding armrest for a vehicle has been disclosed in Korean Patent Publication No. 10-1163450B1 (Patent Document 1).

Patent Document 1 which relates to a sliding armrest for a vehicle, discloses a technology for enhancing operability for sliding by the sliding armrest for a vehicle including: an armrest lower cover opening and closing a storage part of a console box, a sliding rail installed in an upper portion of the armrest lower cover and including a locking plate, a sliding guide slidably-movably joined to the sliding rail and including an elastic member elastically pressurizing the locking plate, and an armrest upper cover having the sliding guide installed in a lower portion thereof to move forward and backward on the armrest lower cover.

However, since the armrest of Patent Document 1 is easily slid by external force, it may be easily slid even when a user does not want to slide the armrest, therefore it may cause inconvenience to the user and hinder safe driving.

US 2016/001684 A1 discloses an apparatus for opening and closing a sliding armrest console. The apparatus has a console body, an opening and closing plate rotatably secured to an upper portion of the console body to thereby open and close an upper surface of the console body, and an armrest slid from the opening and closing plate may include a hook provided to a front end portion of the opening and closing plate.

### SUMMARY OF THE INVENTION

An object of the present invention (which is defined in claim 1) is to provide a sliding armrest for a vehicle capable of being selectively slid by including a stopper operated corresponding to an operation of a knob.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with one aspect of the present invention, a sliding armrest for a vehicle includes: a lower cover having a rotatable hook that is detachably coupled to a console and opening and closing a storage space of the console; an upper cover disposed above the lower cover and slid between a protruding position in a length direction and an initial position; a knob means rotatably disposed at the upper cover and rotating the hook to detach the hook from a console; and a stopper disposed at the upper cover and fastened to the lower cover to restrain sliding of the upper cover or released from the lower cover corresponding to an operation of the knob means to allow the sliding of the upper cover.

The knob means may include a rotating shaft rotatably fastened to the upper cover, a knob protruding from one side of the rotating shaft toward outside of the upper cover and operated by a user, and a moving part protruding from the other side of the rotating shaft to be disposed at an inner side of the upper cover and having an end operate the stopper and a protrusion protruding downward and operating the hook.

The knob means may further include an elastic member disposed at the rotating shaft and having one end fastened to the moving part and the other end fastened to the upper cover to apply elastic force so that the knob rotates downward.

According to the invention, the stopper is disposed at the upper cover to move in an up and down direction and is fastened to the lower cover when moving downward and detached from the lower cover when moving upward.

According to the invention, the stopper includes a housing fastened to the upper cover, a fastening part disposed at the housing to move in an up and down direction and moving downward to be inserted into a hole formed at the lower cover, and a link part supplied with power from the knob means to move the fastening part so that the fastening part is detached from the lower cover.

The stopper may further include an elastic member disposed between the fastening part and the housing and applying an elastic force so that the fastening part moves downward.

The link part may be rotatably fastened to the housing, and one end thereof may contact the knob means and the other end may contact the fastening part to move the fastening part upward when the knob means is operated.

The lower cover may include a first hole into which the fastening part of the stopper is inserted at the initial position of the upper cover and a second hole into which the fastening part of the stopper is inserted at the protruding position of the upper cover.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view schematically illustrating a sliding armrest for a vehicle according to an exemplary embodiment of the present invention;
FIG. 2 is a cross-sectional view schematically illustrating a sliding armrest for a vehicle according to an exemplary embodiment of the present invention;
FIG. 3 is a cross-sectional view schematically illustrating a state in which an upper cover is slid in the sliding armrest for a vehicle according to an exemplary embodiment of the present invention;
FIG. 4 is a perspective view schematically illustrating a knob means and a stopper extracted from the sliding armrest for a vehicle according to an exemplary embodiment of the present invention;
FIG. 5 is a partial perspective view schematically illustrating a knob means and a stopper extracted from the sliding armrest for a vehicle according to an exemplary embodiment of the present invention;
FIG. 6 is a cross-sectional view schematically illustrating a knob means and a stopper extracted from the sliding armrest for a vehicle according to an exemplary embodiment of the present invention; and
FIG. 7 is a cross-sectional view schematically illustrating an operation state of the knob means and the stopper in the sliding armrest for a vehicle according to an exemplary embodiment of the present invention.

### DESCRIPTION OF SPECIFIC EMBODIMENTS

Hereinafter, a sliding armrest for a vehicle according to an exemplary embodiment of the present invention will be described in more detail in order to assist in understanding of the features of the present invention.

It is to be noted that in adding reference numerals to elements of each accompanying drawing, like reference numerals refer to like elements even though like elements are shown in different drawings. Further, in describing exemplary embodiments of the present invention, when it is determined that detailed description of known functions or configuration may obscure the gist of the present invention, the detailed description will be omitted.

Hereinafter, exemplary embodiments of the present invention will be described in detail with reference to the accompanying drawings.

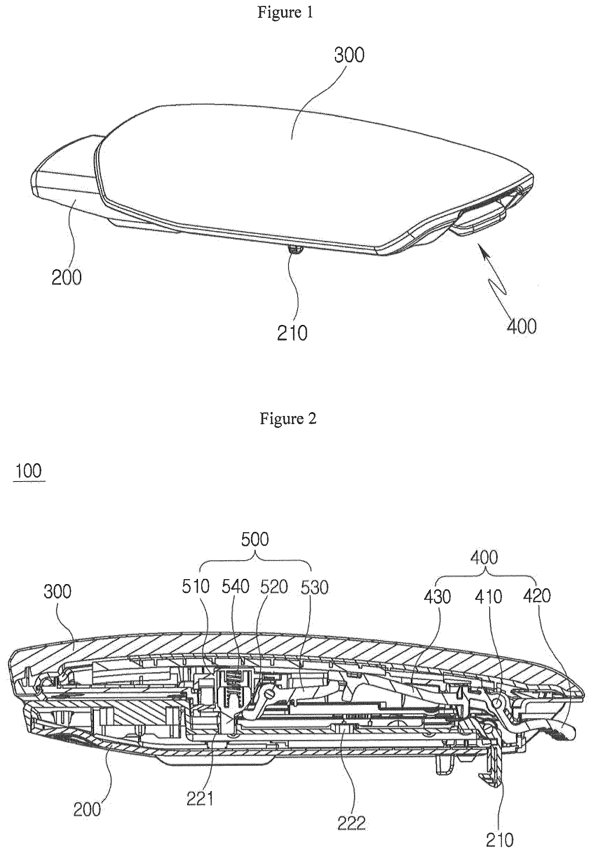

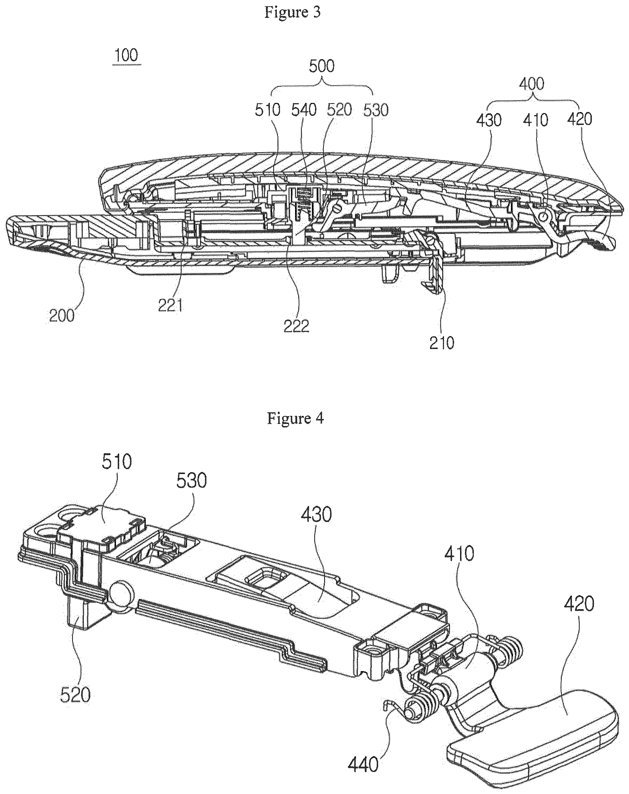

FIG. 1 is a perspective view schematically illustrating a sliding armrest for a vehicle according to an exemplary embodiment of the present invention, FIG. 2 is a cross-sectional view schematically illustrating a sliding armrest for a vehicle according to an exemplary embodiment of the present invention, and FIG. 3 is a cross-sectional view schematically illustrating a state in which an upper cover is slid in the sliding armrest for a vehicle according to an exemplary embodiment of the present invention.

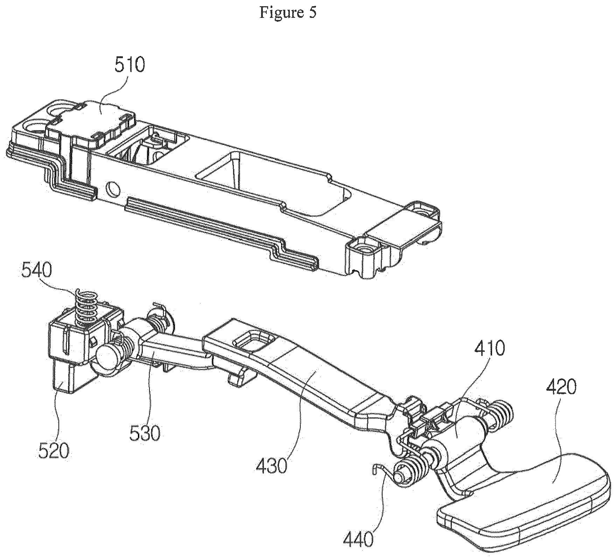

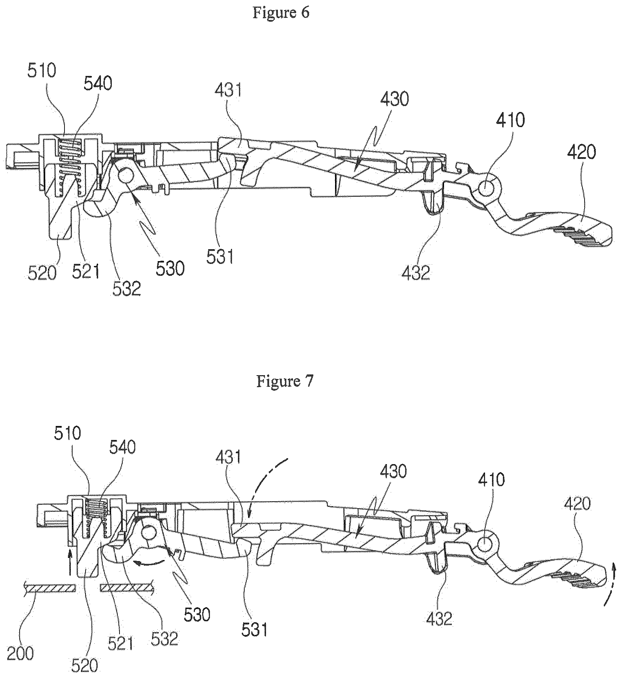

Further, FIG. 4 is a perspective view schematically illustrating a knob means and a stopper extracted from the sliding armrest for a vehicle according to an exemplary embodiment of the present invention, FIG. 5 is a partial perspective view schematically illustrating a knob means and a stopper extracted from the sliding armrest for a vehicle according to an exemplary embodiment of the present invention, and FIG. 6 is a cross-sectional view schematically illustrating a knob means and a stopper extracted from the sliding armrest for a vehicle according to an exemplary embodiment of the present invention.

FIG. 7 is a cross-sectional view schematically illustrating an operation state of the knob means and the stopper in the sliding armrest for a vehicle according to an exemplary embodiment of the present invention.

Referring to FIGS. 1 to 7, the sliding armrest 100 for a vehicle includes a lower cover 200 having a rotatable hook 210 that is detachably coupled to a console and opening and closing a storage space of the console, an upper cover 300 disposed above the lower cover 200 and slid between a protruding position in a length direction and an initial position, a knob means 400 rotatably provided at the upper cover 300 and rotating the hook 210 to detach the hook 210 from the console, and a stopper 500 disposed at the upper cover 300 and fastened to the lower cover 200 to restrain sliding of the upper cover 300 or released from the lower cover 200 corresponding to the operation of the knob means 400 to allow the sliding of the upper cover 300.

Although not illustrated, the lower cover 200 is rotatably fastened to the console of the vehicle and opens or closes an upper portion of the console.

Further, the hook 210 is rotatably fastened to the lower cover 200. The hook 210 is hooked and fastened to the console and keeps a state in which the lower cover 200 closes the console. Further, when the knob means 400 is operated to rotate the hook 210, the hook 210 is released to rotate the lower cover 200 so that the lower cover 200 opens the console. Here, an elastic member is provided at the hook 210 to apply elastic force so that the hook 210 rotates in a direction in which the hook 210 is hooked and fastened to the console.

Further, the lower cover 200 includes a first hole 221 into which a fastening part 520 of the stopper 500 is inserted at the initial position of the upper cover 300 before being slid and a second hole 222 into which the fastening part 520 of the stopper 500 is inserted at the protruding position of the upper cover 300 after being slid in a protruding direction.

Accordingly, when the upper cover 300 is positioned at the initial position or the protruding position, the fastening part 520 of the stopper 500 is inserted into the first hole 221 or the second hole 222 of the lower cover 200 to restrain the sliding of the upper cover 300.

The upper cover 300 is disposed above the lower cover 200 and slid between the initial position thereof before being slid and the protruding position thereof after being slid to protrude in the length direction.

Although not illustrated, a rail (not illustrated) may be provided between the upper cover 300 and the lower cover 200 to guide the sliding of the upper cover 300.

The knob means 400 is rotatably provided at the upper cover 300, and rotates the hook 210 to detach the hook 210 from the console. That is, when a user rotates the knob means 400 by pressurizing the knob means 400 to open the console, the knob means 400 rotates the hook 210 so that the hook 210 is detached from the console.

More specifically, the knob means 400 includes a rotating shaft 410 rotatably fastened to the upper cover 300, a knob 420 protruding from one side of the rotating shaft 410 toward outside of the upper cover 300 and operated by the user, and a moving part 430 protruding from the other side of the rotating shaft 410 to be disposed at an inner side of the upper cover 300 and having an end 431 operate the stopper 500 and a protrusion 432 protruding downward and operating the hook 210.

That is, in the knob means 400, the knob 420 and the moving part 430 are formed to extend from opposing sides of the rotating shaft 410 rotatably fastened to the upper cover 300, and when the user rotates the knob 420 upward by pressurizing the knob 420, the moving part 430 rotates downward.

At this point, the protrusion 432 of the moving part 430 pressurizes the hook 210, thereby rotating the hook 210 to be detached from the console. Further, the end 431 of the moving part 430 rotates downward so that the stopper 500 is detached from the lower cover 200.

In addition, the knob means 400 further includes an elastic member 440 disposed at the rotating shaft 410 and having one end fastened to the moving part 430 and the other end fastened to the upper cover 300 to apply elastic force so that the knob 420 rotates downward.

That is, since the elastic member 440 rotates the knob 420 to be in an initial position when the user does not pressurize the knob 420, the moving part 430 is spaced apart from the hook 210 and the stopper 500 so that the hook 210 and the stopper 500 return to initial positions, that is, a position where the hook 210 is fastened to the console and a position where the stopper 500 is fastened to the lower cover 200, respectively.

The stopper 500 is disposed at the upper cover 300 and fastened to the lower cover 200 to restrain the sliding of the upper cover 300 or released from the lower cover 200 corresponding to the operation of the knob means 400 to allow the sliding of the upper cover 300.

That is, the stopper 500 is disposed at the upper cover 300 to move in an up and down direction, and when the stopper 500 moves downward, the stopper 500 is fastened to the lower cover 200 and when the knob 420 of the knob means 400 rotates upward by the manipulation of the user, the knob 420 moves upward by being supplied with the rotation power of the moving part 430 of the knob means 420 to be detached from the lower cover 200 to thereby release the restraint.

More specifically, the stopper 500 includes a housing 510 fastened to the upper cover 300, the fastening part 520 disposed at the housing 510 to move in an up and down direction and moving downward to be inserted into either of the first hole 221 or the second hole 222 formed at the lower cover 200, and a link part 530 supplied with power from the knob means 400 to move the fastening part 520 so that the fastening part 520 is detached from the lower cover 200.

Further the stopper 500 further includes an elastic member 540 disposed between the fastening part 520 and the housing 510 and applying an elastic force so that the fastening part 520 moves downward.

Here, the link part 530 is rotatably fastened to the housing 510 and one end 531 thereof is disposed under an end 431 of the moving part 430 of the knob means 400 to contact the end 431 and the other end 532 thereof is disposed under a locking part 521 protruding toward one side of the fastening part 520 to contact the locking part 521.

By the configuration, when the user pressurizes the knob 420 of the knob means 400 to rotate the knob upward, the end 431 of the moving part 430 of the knob means 400 rotates one end 531 of the link part 530 downward and the other end 532 of the link part 530 moves the fastening part 520 upward while rotating upward to be detached from the lower cover 200 so that the upper cover 300 may be slid.

According to the sliding armrest for a vehicle according to the present invention, the armrest may be selectively slid by including the stopper operated corresponding to the operation of the knob, thereby providing convenience and safety to a user.

As described above, although the present invention has been described with reference to exemplary embodiments and the accompanying drawings, it would be appreciated by those skilled in the art that the present invention is not limited thereto but various modifications and alterations might be made without departing from the scope defined in the following claims.

## Claims

1. A sliding armrest (100)for a vehicle, comprising:
a lower cover (200) having a rotatable hook (210) that is detachably coupled to a console and opening and closing a storage space of the console;
an upper cover (300) disposed above the lower cover (200) and slid between a protruding position in a length direction and an initial position;
a knob means (400) rotatably disposed at the upper cover (300) and rotating the hook to detach the hook (210) from a console; and
a stopper (500) disposed at the upper cover (300) and fastened to the lower cover (200) to restrain sliding of the upper cover (300) or released from the lower cover (200) corresponding to an operation of the knob means (400) to allow the sliding of the upper cover (300),
wherein the stopper is disposed at the upper cover to move in an up and down direction and is fastened to the lower cover when moving downward and detached from the lower cover when moving upward,
**characterized in that** the stopper (500) includes a housing (510) fastened to the upper cover (300), a fastening part (520) disposed at the housing (510) to move in an up and down direction and moving downward to be inserted into a hole formed at the lower cover (200), and a link part (530) supplied with power from the knob means (400) to move the fastening part (520) so that the fastening part (520) is detached from the lower cover (200).

2. The sliding armrest for a vehicle of claim 1, wherein the knob means (400) includes a rotating shaft (410) rotatably fastened to the upper cover (300), a knob (420) protruding from one side of the rotating shaft (410) toward outside of the upper cover (300) and operated by a user, and a moving part (430) protruding from the other side of the rotating shaft (410) to be disposed at an inner side of the upper cover (300) and having an end operating the stopper and a protrusion protruding downward and operating the hook.

3. The sliding armrest for a vehicle of claim 2, wherein the knob means (400) further includes an elastic member (440) disposed at the rotating shaft (410) and having one end fastened to the moving part and the other end fastened to the upper cover (300) to apply elastic force so that the knob (420) rotates downward.

4. The sliding armrest for a vehicle of claim 1, wherein the stopper (500) further includes an elastic member (440) disposed between the fastening part (520) and the housing (510) and applying an elastic force so that the fastening part (520) moves downward.

5. The sliding armrest for a vehicle of claim 4, wherein the link part is rotatably fastened to the housing (510), and one end thereof contacts the knob means (400) and the other end contacts the fastening part (520) to move the fastening part (520) upward when the knob means (400) is operated.

6. The sliding armrest for a vehicle of claim 1, wherein the lower cover (200) includes a first hole into which the fastening part (520) of the stopper (500) is inserted at the initial position of the upper cover (300) and a second hole into which the fastening part (520) of the stopper (500) is inserted at the protruding position of the upper cover (300).

## Patentansprüche

1. Eine Verschiebungsarmlehne (100) für ein Fahrzeug, die folgende Merkmale aufweist:
eine untere Abdeckung (200) mit einem drehbaren Haken (210), die auf lösbare Weise an eine Konsole gekoppelt ist und einen Aufbewahrungsraum der Konsole öffnet und schließt;
eine obere Abdeckung (300), die über der unteren Abdeckung (200) angeordnet ist und zwischen einer hervorstehenden Stellung in einer Längsrichtung und einer Anfangsstellung geschoben wird;
eine Bedienknopfeinrichtung (400), die drehbar an der oberen Abdeckung (300) angeordnet ist und den Haken dahingehend dreht, den Haken (210) von einer Konsole zu lösen; und
eine Anschlagvorrichtung (500), die an der oberen Abdeckung (300) angeordnet ist und an der unteren Abdeckung (200) dahingehend befestigt ist, ein Verschieben der oberen Abdeckung (300) zu beschränken, oder von der unteren Abdeckung (200) gelöst wird, was einer Betätigung der Betätigungsknopfeinrichtung (400) entspricht, um das Verschieben der oberen Abdeckung (300) zu ermöglichen,
wobei die Anschlageinrichtung an der oberen Abdeckung dahingehend angeordnet ist, sich in einer Oben- und Unten-Richtung zu bewegen, und an der unteren Abdeckung befestigt ist, wenn sich dieselbe nach unten bewegt, und von der unteren Abdeckung gelöst ist, wenn sich dieselbe nach oben bewegt,
**dadurch gekennzeichnet, dass** die Anschlagvorrichtung (500) ein Gehäuse (510), das an der oberen Abdeckung (300) befestigt ist, ein Befestigungsteil (520), das an dem Gehäuse (510) dahingehend angeordnet ist, sich in einer Oben- und Unten-Richtung zu bewegen, und sich dahingehend nach unten bewegt, in ein an der unteren Abdeckung (200) gebildetes Loch eingeführt zu werden, und ein Verknüpfungsteil (530) umfasst, das von der Bedienknopfeinrichtung (400) dahingehend mit Leistung versorgt wird, das Befestigungsteil (520) so zu bewegen, dass das Befestigungsteil (520) von der unteren Abdeckung (200) gelöst wird.

2. Die Verschiebungsarmlehne für ein Fahrzeug gemäß Anspruch 1, wobei die Bedienknopfeinrichtung (400) eine Drehwelle (410), die auf drehbare Weise an der oberen Abdeckung (300) befestigt ist, einen Bedienknopf (420), der von einer Seite der Drehwelle (410) zur Außenseite der oberen Abdeckung (300) hin hervorsteht und durch einen Benutzer betätigt wird, und ein Bewegungsteil (430) umfasst, das von der anderen Seite der Drehwelle (410) dahingehend hervorsteht, an einer Innenseite der oberen Abdeckung (300) angeordnet zu sein, und bei dem ein Ende die Anschlagvorrichtung betätigt und ein Vorstand nach unten hin hervorsteht und den Haken betätigt.

3. Die Verschiebungsarmlehne für ein Fahrzeug gemäß Anspruch 2, bei der die Bedienknopfeinrichtung (400) ferner ein elastisches Bauglied (440) umfasst, welches an der Drehwelle (410) angeordnet ist und bei dem ein Ende an dem Bewegungsteil befestigt ist und das andere Ende an der oberen Abdeckung (300) befestigt ist, um eine elastische Kraft auszuüben, so dass sich der Bedienknopf (420) nach unten dreht.

4. Die Verschiebungsarmlehne für ein Fahrzeug gemäß Anspruch 1, bei der die Anschlagvorrichtung (500) ferner ein elastisches Bauglied (440) umfasst, das zwischen dem Befestigungsteil (520) und dem Gehäuse (510) angeordnet ist und eine elastische Kraft ausübt, so dass sich das Befestigungsteil (520) nach unten bewegt.

5. Die Verschiebungsarmlehne für ein Fahrzeug gemäß Anspruch 4, bei der das Verknüpfungsteil drehbar an dem Gehäuse (510) befestigt ist, und ein Ende desselben die Bedienknopfeinrichtung (400) kontaktiert und das andere Ende das Befestigungsteil (520) kontaktiert, um das Befestigungsteil (520) nach oben hin zu bewegen, wenn die Bedienknopfeinrichtung (400) betätigt wird.

6. Die Verschiebungsarmlehne für ein Fahrzeug gemäß Anspruch 1, bei der die untere Abdeckung (200) ein erstes Loch, in das das Befestigungsteil (520) der Anschlagvorrichtung (500) in der Anfangsstellung der oberen Abdeckung (300) eingeführt ist, und ein zweites Loch umfasst, in das das Befestigungsteil (520) der Anschlagvorrichtung (500) in der hervorstehenden Stellung der oberen Abdeckung (300) eingeführt ist.

## Revendications

1. Accoudoir coulissant (100) pour un véhicule, comprenant:
un couvercle inférieur (200) présentant un crochet rotatif (210) qui est couplé de manière amovible à une console et qui ouvre et ferme un espace de stockage de la console;
un couvercle supérieur (300) disposé au-dessus du couvercle inférieur (200) et coulissant entre une position en saillie dans une direction de la longueur et une position initiale;
un moyen de bouton (400) disposé de manière rotative sur le couvercle supérieur (300) et faisant tourner le crochet pour détacher le crochet (210) d'une console; et
un moyen d'arrêt (500) disposé sur le couvercle supérieur (300) et fixé au couvercle inférieur (200) pour restreindre le coulissement du couvercle supérieur (300) ou dégagé du couvercle inférieur (200), correspondant à une opération du moyen de bouton (400) pour permettre le coulissement du couvercle supérieur (300),
dans lequel le moyen d'arrêt est disposé sur le couvercle supérieur de manière à se déplacer dans une direction vers le haut et vers le bas et est fixé au couvercle inférieur lorsqu'il se déplace vers le bas et est détaché du couvercle inférieur lorsqu'il se déplace vers le haut,
**caractérisé en ce que** le moyen d'arrêt (500) comprend un boîtier (510) fixé au couvercle supérieur (300), une partie de fixation (520) disposée sur le boîtier (510) pour se déplacer dans une direction vers le haut et vers le bas et se déplacer vers le bas pour être introduite dans un trou formé dans le couvercle inférieur (200), et une partie de liaison (530) alimentée en énergie par le moyen de bouton (400) pour déplacer la partie de fixation (520) de sorte que la partie de fixation (520) se détache de la partie inférieure couvercle (200).

2. Accoudoir coulissant pour véhicule selon la revendication 1, dans lequel le moyen de bouton (400) comporte un arbre rotatif (410) fixé de manière rotative au couvercle supérieur (300), un bouton (420) ressortant d'un côté de l'arbre rotatif (410) vers l'extérieur du couvercle supérieur (300) et actionné par un utilisateur, et une partie mobile (430) ressortant de l'autre côté de l'arbre rotatif (410) pour être disposée d'un côté intérieur du couvercle supérieur (300) et présentant une extrémité actionnant le moyen d'arrêt et une saillie ressortant vers le bas et actionnant le crochet.

3. Accoudoir coulissant pour véhicule selon la revendication 2, dans lequel le moyen de bouton (400) comporte par ailleurs un élément élastique (440) disposé sur l'arbre rotatif (410) et présentant une extrémité fixée à la partie mobile et l'autre extrémité fixée au couvercle supérieur (300) pour appliquer une force élastique de sorte que le bouton (420) tourne vers le bas.

4. Accoudoir coulissant pour véhicule selon la revendication 1, dans lequel le moyen d'arrêt (500) comporte par ailleurs un élément élastique (440) disposé entre la partie de fixation (520) et le boîtier (510) et appliquant une force élastique de sorte que la partie de fixation (520) se déplace vers le bas.

5. Accoudoir coulissant pour véhicule selon la revendication 4, dans lequel la partie de liaison est fixée de manière rotative au boîtier (510), et une extrémité de cette dernière entre en contact avec le moyen de bouton (400) et l'autre extrémité entre en contact avec la partie de fixation (520) pour déplacer la partie de fixation (520) vers le haut lorsque le moyen de bouton (400) est actionné.

6. Accoudoir coulissant pour véhicule selon la revendication 1, dans lequel le couvercle inférieur (200) comporte un premier trou dans lequel est introduite la partie de fixation (520) du moyen d'arrêt (500) à la position initiale du couvercle supérieur (300) et un deuxième trou dans lequel est introduite la partie de fixation (520) du moyen d'arrêt (500) à la position en saillie du couvercle supérieur (300).
